# FASCICULE DE BREVET EUROPEEN

(11) **EP 2 406 159 B1**
(45) Date de publication et mention de la délivrance du brevet: **21.11.2012**
(21) Numéro de dépôt: 10708134.1
(22) Date de dépôt: 09.03.2010
(51) Int. Cl.: B65B 43/12, B65H 5/38, B65B 59/00

(54) **DISPOSITIF DE TRANSFERT POUR SUPPORT PLAN DANS UNE MACHINE DE PRODUCTION D'EMBALLAGES**
TRANSPORTVORRICHTUNG FÜR EBENE AUFLAGE IN EINER MASCHINE ZUR HERSTELLUNG VON VERPACKUNGEN
TRANSFER DEVICE FOR A FLAT SUPPORT IN A PACKAGING PRODUCTION MACHINE

(30) Priorité: 13.03.2009 EP 09003643
(43) Date de publication de la demande: 18.01.2012
(73) Titulaire: BOBST MEX SA, 1031 Mex (CH)
(72) Inventeur: COMPAGNONE, Giovanni, CH-1023 Crissier (CH)
(74) Mandataire: Poirier, Jean-Michel Serge
(86) Numéro de dépôt international: PCT/EP2010/001454
(87) Numéro de publication internationale: WO 2010/102783

(56) Documents cités:
- WO-A-2005/012145
- DE-A1- 10 158 189
- JP-U- 55 023 375
- US-A- 5 637 183
- US-A1- 2004 094 391
- US-A1- 2007 108 021

## Description

La présente invention concerne un dispositif pour transférer un ou plusieurs supports plans. Le ou les supports plans sont transférés grâce au dispositif qui est monté entre deux unités successives dans une machine de production d'emballages.

Une machine de production d'emballages est destinée à la fabrication de boîtes, qui seront aptes à former des emballages, après pliage et collage. Dans la machine, un support plan initial utilisé, est par exemple un support continu, tel qu'une bande vierge de carton. La bande est déroulée de manière continue, et est imprimée par une unité d'impression, constituée elle-même de sous-unités sous la forme de groupes imprimeurs. La bande est transférée dans une unité de découpe, qui est une presse de découpage à platine.

Après découpe, les poses obtenues ont des zones de déchets qui sont séparées et éliminées dans une unité d'éjection des déchets. L'unité d'éjection est montée à la suite de la presse. Les boîtes sont ensuite séparées, mises en nappes, avant d'être empilées par rangées pour former des piles dans une station de réception et de palettisation, en vue de leur stockage, ou de leur transport hors de la machine.

À l'intérieur de la machine, les unités sont à chaque fois séparées les unes des autres par un espacement longitudinal. Cet espacement est tout d'abord fonction de la longueur individuelle de chacune des unités composant la machine. Cet espacement est ensuite fonction de la place disponible dans l'usine pour la machine. L'espacement est aussi utile en cas de remplacement d'une unité par une autre. Même si la nouvelle unité provient d'un concepteur différent et présente une longueur différente, elle doit pouvoir s'insérer aisément dans la machine, sans qu'il y ait nécessité de démonter l'ensemble des unités.

Un tel espacement est aussi utile pour permettre à un opérateur de pouvoir traverser la machine en passant du côté conducteur au côté opposé conducteur. Grâce à l'espacement, l'opérateur accède par exemple aux organes d'entraînement, ou à certaines fonctions électriques, situés à l'arrière de la machine. Grâce à l'espacement, l'opérateur peut aussi atteindre le côté transversal amont ou aval de l'unité, par exemple pour effectuer un nettoyage, ou un débourrage de carton. L'opérateur ou le monteur de la machine peut intervenir sur des pièces situées au coeur même de l'unité amont et de l'unité aval sans être gêné, l'espacement améliorant ainsi l'ergonomie de maintenance.

Pour permettre à la bande continue, ou aux poses et aux boîtes, due passer d'une unité située en amont à une autre unité située en aval, différents moyens de transfert actifs ou passifs sont prévus. Ces moyens assurent ainsi le pontage de l'espacement entre l'unité amont et l'unité aval.

### Etat de la technique

Dans la machine d'impression dans laquelle la bande continue traverse une succession d'unités, des cylindres, entraînés ou non entraînés, et disposés parallèlement les uns par rapport aux autres, permettent d'entraîner la bande et/ou de la maintenir sous tension.

Dans une machine, de type plieuse-colleuse, ou presse de découpe à platine, un système d'entraînement actif par friction avec un transporteur à courroies sans fin inférieure et supérieure, ou avec un transporteur à courroies sans fin inférieure et des galets presseurs supérieurs, ou avec un transporteur à courroie sans fin inférieure associé à une aspiration, ou avec des séries de rouleaux parallèles ou une trame à billes, avec ou sans aspiration, permettent de faire circuler les poses et les boîtes avant ou après découpe et séparation.

On connaît également d'après le document US- 4.768.912 un appareil de taquage pour papier avec passage de feuilles de papier d'une table d'alimentation pour du papier vers une table d'empilage du papier. L'appareil comprend en outre une plaque de passage du papier et une plaque de transport par vibration. La plaque de passage recouvre la plaque de transfert par vibration, cette dernière étant disposée à proximité de la zone supérieure de la table d'empilage.

La plaque de passage possède une forme incurvée, de façon à provoquer un transit libre des feuilles de carton vers la plaque de transfert par vibration. La plaque de passage ponte ainsi une partie de l'espacement entre les tables d'alimentation et d'empilage pour faciliter la fonction de transfert du carton.

Cependant, de tels entraînements, ou plaques de passage ou dispositifs de transfert présentent l'inconvénient d'être conçus dès le départ avec la bonne longueur afin de pouvoir être inséré dans la machine. Si le fabricant d'emballage souhaite remplacer une seule unité à l'intérieur de sa machine, il est également obligé de changer un ou plusieurs dispositifs de transfert de support, situés en amont et/ou en aval de la nouvelle unité.

De plus, le ou les supports pians doivent pouvoir être transférés d'une unité amont à une unité aval, sans que leur position et leur vitesse ne soient modifiées. La position du ou des supports plans doit rester identique par rapport à l'axe longitudinal médian de l'unité amont et de la machine, entre la sortie de l'unité amont et l'entrée de l'unité aval. La vitesse, ou le cas échéant l'accélération, du ou des supports plans doivent rester constantes entre la sortie de l'unité amont et l'entrée de l'unité aval.

### Exposé de l'invention

Un objectif principal de la présente invention consiste à mettre au point un dispositif permettant d'assurer une circulation, ou un transfert continu d'un ou plusieurs supports plans dans une machine de production d'emballage. Un deuxième objectif est de réaliser un dispositif pour transférer un support plan, capable de s'adapter à tous types de machines dans laquelle il est inséré. Un troisième objectif est de faciliter le déplacement d'un support plan grâce à un dispositif de transfert. Un quatrième objectif est d'obtenir un transfert d'un support plan d'une unité à une autre unité, et ceci quelles que soient les dimensions de ce support. Un autre objectif encore est celui de prévoir une machine de production d'emballages avec un ou plusieurs dispositifs de transfert pour support intégré entre une unité amont et une unité aval.

Un dispositif de transfert pour un ou plusieurs supports plans est apte à être intercalé entre deux unités successives, une unité amont et une unité aval dans une machine de production d'emballages. Le dispositif de transfert comprend un pont avec une surface supérieure assurant une jonction entre l'unité amont et l'unité aval. Le dispositif de transfert comprend des moyens de réglage pour faire varier une longueur du pont.

Conformément à un aspect de la présente invention, le dispositif de transfert est caractérisé en ce que le pont est un tapis statique, sur lequel glisse le ou les supports plans. Le tapis présente une extrémité transversale fixe et une extrémité transversale mobile. Les moyens de réglage font varier une position de l'extrémité transversale mobile, en fonction d'un espacement existant entre les deux unités successives, l'unité amont et l'unité aval.

Dans l'ensemble de la description, le support plan est défini, à titre d'exemple non exhaustif, comme étant sous la forme :
- d'une bande continue, par exemple
   de papier, ou de carton, ou de plastique, tel que du polyéthylène téréphtalate (PET), du polypropylène biorienté (BOPP), ou d'autres polymères, ou d'aluminium, ou d'autres matériaux, ou sous la forme
- d'un support en plaque ou en feuille, par exemple
   du carton plat, ou du carton ondulé, ou encore un matériau flexible, tel que du polyéthylène (PE), ou d'autres matériaux encore, ou sous la forme
- d'un support en forme de boîtes ou de poses, issues d'une découpe dans une presse de découpage à platine ou dans une découpeuse rotative.

Les sens amont et aval sont définis en faisant référence au sens de déplacement du support, suivant la direction longitudinale dans la station d'introduction et dans l'ensemble de la machine de traitement. La direction longitudinale est définie en faisant référence au sens de déplacement du support dans la machine, selon son axe longitudinal médian. La direction transversale est définie comme étant la direction perpendiculaire à la direction d'entraînement du support.

Les unités sont définies, à titre d'exemples non exhaustifs, comme étant des groupes imprimeurs, des groupes de gaufrage, une unité de découpe rotative, une presse de découpage à platine, une station d'introduction pour presse de découpage à platine, une unité d'éjection des déchets, un séparateur de poses, une réception, ou d'autres encore.

Autrement dit, le dispositif permet de combler tout espacement ou tout écartement pouvant exister entre deux unités à l'intérieur d'une machine. Par rapport aux entraînements ou plaques de passage de l'art antérieur possédant tous une longueur fixe, le dispositif selon l'invention permet de créer à volonté un pont à longueur variable.

Le dispositif est sans entraînement. La surface du pont est prévue de façon à ce que le support glisse sans rencontrer d'obstacles. Le support se déplace grâce à son inertie propre, sa vitesse ou son accélération étant générée par l'unité amont.

Un avantage supplémentaire est que le dispositif de transfert comprend également les moyens de réglage pour faire varier une longueur du pont de jonction, en fonction de la longueur des supports. Grâce à cette longueur réglable du dispositif, les supports sont encore maintenus et entraînés au niveau de leur bord arrière par l'unité amont, lorsque ces mêmes supports se retrouvent attrapés puis entraînés au niveau de leur bord avant par l'unité aval.

Selon un autre aspect de l'invention, une machine de production d'emballages, intégrant une unité amont sous la forme d'une unité de transformation d'un support, est caractérisée en ce qu'elle comprend un dispositif, présentant une ou plusieurs des caractéristiques techniques décrites ci-dessous et revendiquées, installé en aval de l'unité de transformation du support en amont.

Par sa facilité d'adaptation, un tel dispositif s'insère entre deux unités. Ceci permet toutes les modifications de longueur pour l'unité amont ou aval.

### Brève description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue latérale synoptique d'une machine de production d'emballages équipée avec un dispositif de transfert d'un support dans une position déployée selon l'invention ;
- la Figure 2 représente une vue en perspective du dispositif ;
- la Figure 3 représente une vue du dessus synoptique de la machine de production d'emballage avec le dispositif des Figures 1 et 2 dans une position déployée ;
- la Figure 4 représente une vue du dessus synoptique de la machine de production d'emballage avec le dispositif des Figures 1 et 2 dans une position rétractée ;
- la Figure 5 représente une vue latérale du dispositif dans une position déployée ; et
- la Figure 6 représente une vue latérale du dispositif dans une position rétractée.

### Exposé détaillé de modes de réalisation préférés

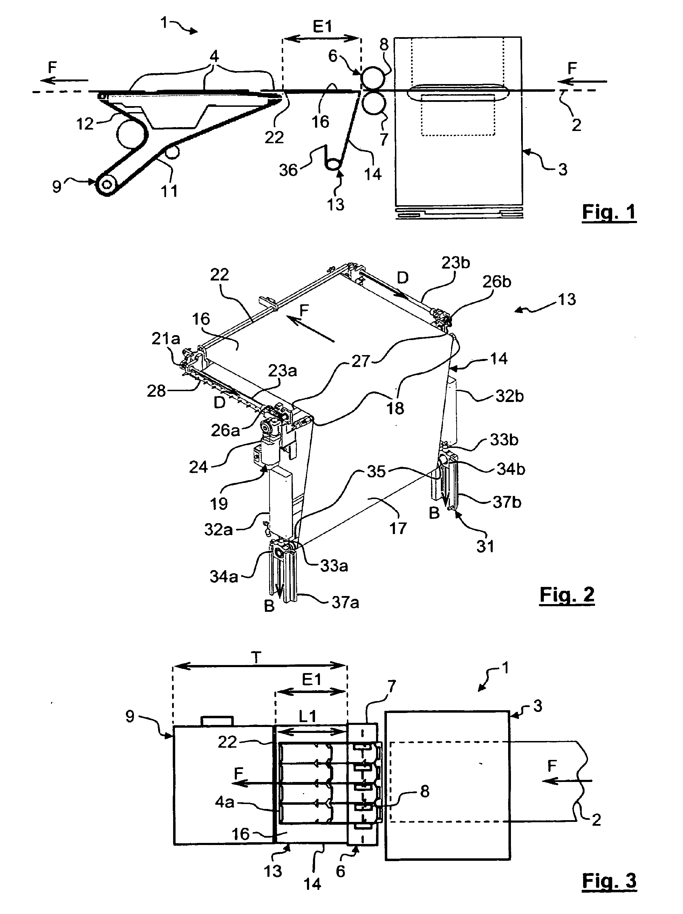

Comme l'illustrent les Figures 1, 3 et 4, une machine de production d'emballages (1) traite un support ou une matière en bande continue (2), étant ici du carton plat. La machine (1) comprend une unité de transformation, qui est, dans ce cas, une presse de découpage à platine (3).

La bande (2) rentre dans la presse (3) par son côté transversal en amont. La bande (2) arrive dans la presse (3) avec une vitesse intermittente, qui est cadencée grâce à une station d'introduction (non représentée). En amont de la presse (3) et ainsi de la station d'introduction, la machine (1) peut également présenter, à titre d'exemple, des unités telles que des groupes imprimeurs, des moyens pour contrôler la qualité et le registre, des groupes de gaufrage, etc. (non représentés).

La presse (3) découpe la bande (2) et délivre le support sous la forme de poses (4), étant ici de ce fait en carton plat. Les poses (4) sortent de la presse (3) par son côté transversal en aval. Le sens d'avance ou de défilement (Flèches F dans les Figures) de la bande (2) et des poses (4) suivant la direction longitudinale indique le sens amont et le sens aval.

La machine (1) comprend une unité, sous la forme d'un agencement d'entraînement (6), qui est disposée en aval de la presse (3). Cet agencement (6) comprend tout d'abord un rouleau d'entraînement inférieur (7), entraîné en rotation par moteur. L'agencement (6) comprend ensuite un seul ou une série de galets presseurs (8), disposés au-dessus en appui contre le rouleau (7).

Les poses (4) sont engagées, maintenues et entraînées entre le rouleau (7) et le ou les galets (8). L'agencement (6) assure un transfert actif des poses (4). L'agencement (6) est destiné à dégager les poses (4), successivement les unes après les autres, hors de la presse (3), selon la direction longitudinale (F), de l'amont vers l'aval.

La machine (1) comprend une unité de transport, connue sous la dénomination de transport vacuum (9), qui est disposée en aval de la presse (3), après l'agencement d'entraînement (6). Ce transport vacuum (9) comprend un transporteur avec une ou plusieurs courroies sans fin inférieures à orifices (11). Un caisson à vacuum (12), connecté à une source de vide, plaque les poses (4) contre la ou les courroies (11).

Les poses (4) sont disposées, les unes à la suite des autres, avec un court intervalle entre elles sur la face supérieure des courroies (11). Le transport vacuum (9) assure un transfert actif des poses (4). La ou les courroies (11) entraînent les poses (4), selon la direction longitudinale (F), de l'amont vers l'aval.

L'espacement (E1 et E2) entre les deux unités, l'agencement d'entraînement (6) et le transport vacuum (9), est variable d'une machine à une autre. Ces espacements (E1 et E2) sont fonction du positionnement respectif et de la longueur de ces deux unités (6 et 9), intégrées dans la machine de production d'emballages (1).

La machine (1) comprend ensuite une unité d'éjection des déchets (non représentée), qui est placée en aval après le transport vacuum (9). Cette unité permet d'éliminer de manière contrôlée des déchets de carton qui sont prédécoupés à partir des poses (4).

La machine de production d'emballages (1) comprend un dispositif de transfert selon l'invention (13) pour un ou plusieurs supports plans, i.e. les poses (4). Le dispositif (13), qui peut être intercalé entre deux unités successives, une unité amont et une unité aval. Le dispositif (13) est destiné à faire passer les poses (4), à partir d'une unité amont, sous la forme de la presse de découpage à platine (3), vers une unité aval, sous la forme de l'unité d'éjection des déchets.

De manière plus précise, et dans un mode de réalisation particulièrement intéressant, la machine (1) peut comprendre, dans l'ordre, de l'amont vers l'aval, la presse de découpage à platine (3), l'agencement d'entraînement (6), le dispositif (13), le transport vacuum (9), et l'unité d'éjection des déchets. En d'autres termes, le dispositif (13) est placé, en aval, à la sortie de l'agencement d'entraînement (6), et en amont, à l'entrée du transport vacuum (9).

Le dispositif (13) assure un transfert passif des poses (4). Pour ce faire et comme cela est visible dans les Figures, le dispositif (13) comprend un pont (14) assurant une jonction entre l'unité amont, i.e. l'agencement d'entraînement (6), et l'unité aval, i.e. le transport vacuum (9). Le pont de jonction (14) présente une forme de L inversé. Le pont (14) est analogue à un tapis, avec une surface supérieure (16) et un flanc inférieur (17).

Les poses (4) passent en glissant sur la surface supérieure (16). La surface supérieure (16) du pont (14) peut être préférentiellement sensiblement plane. Dans cet exemple de réalisation, la surface supérieure (16) est sensiblement horizontale. La surface supérieure (16) garantit un plan continu entre une surface située à l'intérieur de la presse (3), l'agencement d'entraînement (6) et le transport vacuum (9). Les poses (4) circulent ainsi dans ce plan en suivant la direction longitudinale (F).

Pour que les poses (4) se déplacent par leur propre inertie, la surface supérieure (16) peut être avantageusement sensiblement lisse. La surface supérieure (16) est antistatique. La surface supérieure (16) est non-adhérente et peut posséder un faible coefficient de frottement. De cette manière, les poses (4) vont glisser sans risquer un accrochage de leurs pattes avant.

Le flanc inférieur (17) du pont (14) est disposé en-dessous de l'agencement (6) et est sensiblement vertical ou sensiblement parallèle au côté transversal aval de la presse (3). La transition entre la surface supérieure (16) et le flanc inférieur (17) se fait grâce à une barre transversale (18) formant une arête. Le flanc inférieur (17) du pont (14) sert ainsi de stockage de longueur inutilisée de pont (14), pour l'ajustage de longueur (L1 et L2).

Le pont (14) peut être favorablement réalisé en un matériau pouvant posséder une aptitude à être déformé. A titre d'exemple, la surface (16) du pont (14) peut être réalisée en polyuréthane thermoplastique d'une épaisseur sensiblement égale à 1 mm. Cette souplesse ou cette flexibilité permet le passage de la barre (18). Un tel matériau rend le pont (14) apte à être facilement déployé, puis rétracté, en fonction de la longueur souhaitée (L1 et L2).

Comme le montrent les Figures 3 à 6, une longueur (L1 et L2) du dispositif (13), et plus précisément de la surface supérieure (16) du pont (14), varie en fonction de l'espacement (E1 et E2) existant entre les deux unités successives, l'unité amont, i.e. par exemple l'agencement (6), et l'unité aval, i.e. par exemple le transport vacuum (9). Toutes les longueurs comprises entre L1 et L2 peuvent être choisies puis réglées par l'opérateur.

La machine (1) peut également favorablement intégrer une unité aval (9) à longueur variable. Dans ce cas, la longueur (L1 ou L2) du dispositif (13) additionnée à la longueur de l'unité aval (9) peut être constante (T). Le transport vacuum (9) peut ainsi présenter une longueur variable. On peut choisir la longueur (L1, L2) du dispositif (13) de sorte que cette dernière additionnée à la longueur du transport vacuum (9) reste une constante (T).

La longueur (L1 ou L2) du pont (14) peut être choisie en fonction du format des poses (4a et 4b). De cette manière, la pose (4a et 4b) garde toujours une zone avant et/ou arrière entraînée par l'agencement (6) et/ou par le transport vacuum (9).

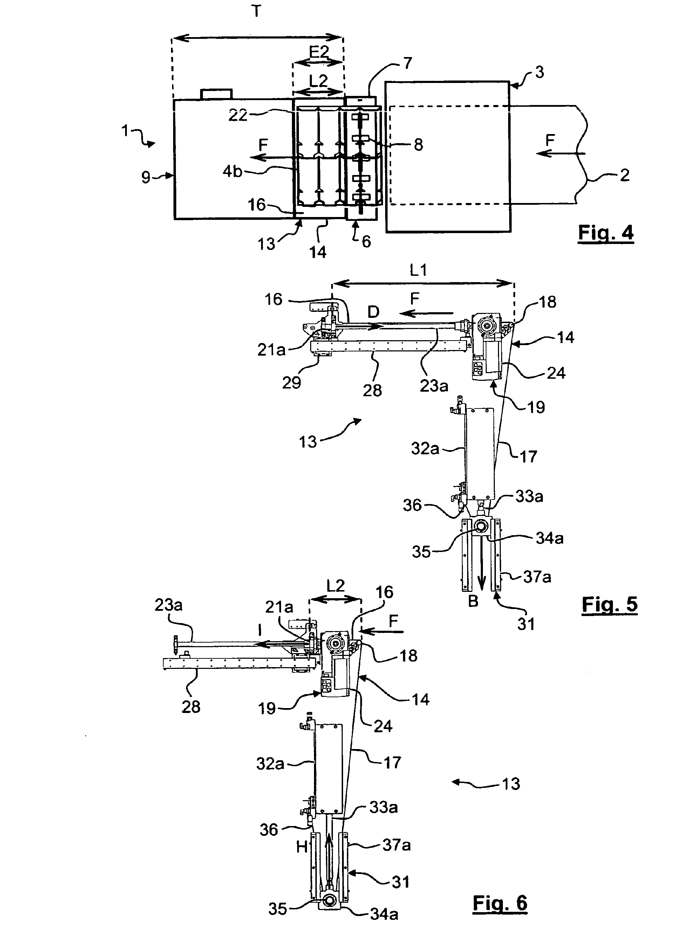

Dans le cas visible en Figure 3, les poses (4a) présentent une longueur plus importante (carton « long grain »). L'opérateur va rallonger la longueur (L1) du pont (14) et va raccourcir la longueur du transport vacuum (9), en gardant constante la longueur totale (T). Dans le cas visible en Figure 4, les poses (4b) présentent une longueur plus faible (carton en « short grain »). L'opérateur va raccourcir la longueur (L2) du pont (14) et va rallonger la longueur du transport vacuum (9), en gardant constante la longueur totale (T).

Le dispositif de transfert (13) comprend ainsi des moyens de réglage (19) pour faire varier cette longueur (L1 et L2) du pont (14). Grâce à ces moyens de réglage (19), l'opérateur ajuste la longueur (L1 et L2) du pont (14), de façon à ce que celle-ci corresponde à l'espacement (E1 et E2). Pour une bonne circulation et un maintien des poses (4, 4a et 4b), une valeur d'espacement (E1 ou E2 ou intermédiaires) est égale à une longueur (L1 ou L2 ou intermédiaires) du pont (14).

De préférence, les moyens de réglage (19) peuvent comprendre au moins un coulisseau solidaire du pont (14). Dans le cas présent, deux coulisseaux peuvent être sous la forme de deux écrous latéraux (21a et 21b), positionnés de part et d'autre du pont (14). Les deux écrous (21 a et 21b) peuvent être avantageusement chacun fixés à une extrémité transversale, supérieure, aval et mobile (22) du pont (14), latéralement, i.e. côté conducteur et côté opposé conducteur.

De manière favorable, les moyens de réglage (19) peuvent comprendre au moins une coulisse fixée à un bâti (non représenté) du dispositif (13). Dans le cas présent, deux coulisses latérales peuvent être sous la forme de deux vis à bille (23a et 23b), positionnées de part et d'autre du pont (14). Les deux vis (23a et 23b) peuvent être préférentiellement chacune fixées latéralement, i.e. côté conducteur et côté opposé conducteur, au bâti (non représenté) du dispositif (13), tout en restant aptes à tourner. Les deux vis (23a et 23b) sont disposées parallèles entre-elles, dans le même plan que celui formé par la surface supérieure (16), sensiblement à l'horizontale.

Les deux vis (23a et 23b) peuvent être entraînées en rotation grâce à un seul moteur (24), disposé côté conducteur. Deux engrenages (26a et 26b), placés côté conducteur et côté opposé conducteur, et un arbre de renvoi (27) permettent la transmission du mouvement du côté conducteur au côté opposé conducteur.

Le coulisseau, i.e. les deux écrous (21a et 21b), peut coopérer avec la coulisse, i.e. les deux vis (23a et 23b). Lorsque les deux vis (23a et 23b) sont mises en rotation par le moteur (24), elles entraînent en déplacement longitudinal (Flèches D et I dans les Figures 2, 5 et 6) les deux écrous (21a et 21 b).

Lorsque les deux vis (23a et 23b) tournent dans un premier sens, les deux écrous (21a et 21b) se déplacent vers l'amont (D), entraînant l'extrémité (22) du pont (14) vers l'amont. La longueur du pont (14) diminue et passe d'une valeur L1 à L2. Lorsque les deux vis (23a et 23b) tournent dans un deuxième sens opposé au premier sens, les deux écrous (21a et 21b) se déplacent vers l'aval (I), entraînant l'extrémité (22) du pont (14) vers l'aval. La longueur du pont (14) augmente et passe d'une valeur L2 à L1.

Le déplacement longitudinal (D et I) des deux écrous (21a et 21b) est stabilisé par deux règles (28), solidarisées au bâti du dispositif (13). Chacune des deux règles (28) correspond et est respectivement parallèle à chacune des deux vis (23a et 23b). Chacun des deux écrous (21a et 21b) comprend une pièce inférieure (29) coulissant sur la règle (28).

Pour compenser les variations de longueur (L1 et L2) du pont (14) et pour pouvoir maintenir le pont (14) sous une tension constante, le dispositif (13) peut préférentiellement comprendre des moyens de tension (31). De manière avantageuse, les moyens de tension (31) peuvent comprendre deux vérins latéraux (32a et 32b). Ces deux vérins (32a et 32b) peuvent être disposés latéralement de part et d'autre du pont (14), et fixés à un bâti du dispositif (13). Les deux vérins (32a et 32b) sont prévus, montés verticalement, au niveau du flanc inférieur (17), côté conducteur et côté opposé conducteur. Chacun des deux vérins (32a et 32b) comprend un piston mobile (33a et 33b) orienté vers le bas.

La partie d'extrémité de chacun des pistons (33a et 33b) se termine par un palier (34a et 34b). Chacun des deux paliers (34a et 34b) maintient une tringle transversale (35). La tringle (35) assure la transition, entre le flanc inférieur (17) du pont (14) et une extrémité transversale, inférieure, amont et fixe (36) formant une attache transversale pour une fixation du pont (14) au bâti. L'extrémité transversale fixe (36) est placée en amont et en dessous de l'extrémité transversale mobile (22). Le flanc inférieur (17) et l'extrémité fixe (36) sont escamotés sous la surface supérieure (16) du pont (14).

En formant une arête, la tringle (35) constitue un point ou une arête de renvoi pour le pont (14). Chacun des deux paliers (34a et 34b) coulisse à la verticale (Flèches B et H dans les Figures 2, 5 et 6) dans un guide (37a et 37b).

Comme le montrent les Figures 2 et 5, lorsque les deux paliers (34a et 34b) et les deux pistons (33a et 33b) des deux vérins (32a et 32b) descendent en coulissant à la verticale (B) dans les deux guides respectifs (37a et 37b), la tringle (35) descend. Les deux vis-à-bille (23a et 23b) ramènent simultanément les deux écrous (21a et 21b) vers l'amont, et la tringle (35) est poussée vers le bas sous l'action des deux vérins (32a et 32b). La longueur de la surface supérieure (16) du pont (14) diminue (de L1 à L2).

A l'inverse (voir Figure 6), lorsque les deux paliers (34a et 34b) et les deux pistons (33a et 33b) des deux vérins (32a et 32b) remontent en coulissant à la verticale (H) dans les deux guides respectifs (37a et 37b), la tringle (35) monte. Les deux vis-à-bille (23a et 23b) ramènent simultanément les deux écrous (21a et 21b) vers l'aval, et la tringle (35) est ramenée vers le haut. La longueur de la surface supérieure (16) du pont (14) augmente (de L2 à L1).

Sous l'action des deux vérins (32a et 32b), la tension du pont (14) est maintenue constante, quelle que soient les longueurs (L1, L2 ou intermédiaires) du pont (14).

La présente invention n'est pas limitée aux modes de réalisation décrits et illustrés. De nombreuses modifications peuvent être réalisées, sans pour autant sortir du cadre défini par la portée du jeu de revendications.

## Revendications

1. Dispositif de transfert pour un ou plusieurs supports plans (4, 4a, 4b), apte à être intercalé entre deux unités successives amont et aval (3, 6, 9) dans une machine de production d'emballages (1), comprenant un pont (14) avec une surface supérieure (16) assurant une jonction entre l'unité amont (3, 6) et l'unité aval (9), et des moyens de réglage (19) pour faire varier une longueur (L1, L2) du pont (14), **caractérisé en ce que** le pont (14) est un tapis statique sur lequel glisse le support (4, 4a, 4b), présentant une extrémité transversale fixe (36) et une extrémité transversale mobile (22), les moyens de réglage (19) faisant varier une position de l'extrémité mobile (22), en fonction d'un espacement (E1, E2) entre les deux unités (3, 6, 9).

2. Dispositif selon la revendication 1, **caractérisé en ce que** les moyens de réglage (19) comprennent au moins un coulisseau solidaire du pont (14) et coopérant avec au moins une coulisse fixée à un bâti.

3. Dispositif selon la revendication 2, **caractérisé en ce que** les moyens de réglage (19) comprennent deux coulisseaux sous la forme d'écrous latéraux (21a, 21b) fixés latéralement à l'extrémité mobile (22) du pont (14), et deux coulisses latérales, sous la forme de vis-à-bille (23a, 23b), entraînées en rotation par moteur (24), disposées de part et d'autre du pont (14), et fixées au bâti.

4. Dispositif selon l'une quelconque des revendications précédentes, la surface supérieure (16) est sensiblement plane, lisse et horizontale.

5. Dispositif selon l'une quelconque des revendications précédentes, **caractérisé en ce que** le pont (14) est réalisé en un matériau possédant une aptitude à être déformé.

6. Dispositif selon l'une quelconque des revendications précédentes, **caractérisé en ce qu'**il comprend des moyens de tension (31) pour maintenir le pont (14) sous une tension constante.

7. Dispositif selon la revendication 6, **caractérisé en ce que** les moyens de tension (31) comprennent deux vérins latéraux (32a, 32b) disposés de part et d'autre du pont, et fixés à un bâti.

8. Dispositif selon l'une quelconque des revendications précédentes, **caractérisé en ce que** l'extrémité transversale fixe (36) est placée en amont et en dessous de l'extrémité transversale mobile (22).

9. Machine de production d'emballages, intégrant une unité amont sous la forme d'une unité de transformation (3) d'un support (2), **caractérisée en ce qu'**elle comprend un dispositif (13) selon l'une quelconque des revendications précédentes, installé en aval de l'unité de transformation (3).

10. Machine selon la revendication 9, **caractérisée en ce qu'**elle intègre une unité aval (9) à longueur variable, et **en ce que** la longueur (L1, L2) du dispositif (13) additionnée à la longueur de l'unité aval (9) est constante (T).

11. Machine selon la revendication 9 ou 10, **caractérisée en ce que** le dispositif (13) est intercalé entre l'unité amont, sous la forme d'une presse de découpage à platine (3), et une unité aval, sous la forme d'un transport vacuum (9).

12. Machine selon l'une quelconque des revendications 9 à 11, **caractérisée en ce qu'**elle comprend, dans l'ordre, de l'amont vers l'aval, une presse de découpage à platine (3), un agencement d'entraînement (6), le dispositif (13), un transport vacuum (9), et une unité d'éjection des déchets.

## Claims

1. A transfer device for one or more flat substrates (4, 4a, 4b), which can be inserted between two successive units upstream and downstream (3, 6, 9) in a packaging production machine (1), comprising a bridge (14) with an upper surface (16) providing a junction between the upstream unit (3, 6) and the downstream unit (9), and adjustment means (19) for varying a length (L1, L2) of the bridge (14), **characterized in that** the bridge (14) is a static apron on which the substrate (4, 4a, 4b) slides, having a fixed transversal end (36) and a mobile transversal end (22), the adjustment means (19) varying a position of the mobile end (22), as a function of a spacing (E1, E2) between the two units (3, 6, 9).

2. Device according to Claim 1, **characterized in that** the adjustment means (19) comprise at least one slider joined to the bridge (14) and cooperating with at least one slide secured to a frame.

3. Device according to Claim 2, **characterized in that** the adjustment means (19) comprise two sliders in the form of lateral nuts (21 a, 21 b) secured laterally to the mobile end (22) of the bridge (14), and two lateral slides, in the form of ball screw (23a, 23b), rotatably driven by a motor (24), positioned on either side of the bridge (14), and secured to the frame.

4. Device according to any one of the preceding claims, the upper surface (16) being substantially flat, smooth and horizontal.

5. Device according to any one of the preceding claims, **characterized in that** the bridge (14) is made of a material capable of being deformed.

6. Device according to any one of the preceding claims, **characterized in that** it comprises tension means (31) for keeping the bridge (14) at a constant tension.

7. Device according to Claim 6, **characterized in that** the tension means (31) comprise two lateral jacks (32a, 32b) positioned on both side of the bridge, and fixed to a frame.

8. Device according to any one of the preceding claims, **characterized in that** the fixed transversal end (36) is placed upstream of and beneath the mobile transversal end (22).

9. Packaging production machine, incorporating an upstream unit in the form of a unit (3) for converting a substrate (2), **characterized in that** it comprises a device (13) according to any one of the preceding claims, installed downstream of the transformation unit (3).

10. Machine according to Claim 9, **characterized in that** it incorporates a downstream unit (9) of variable length, and **in that** the length (L1, L2) of the device (13) added to the length of the downstream unit (9) is constant (T).

11. Machine according to Claim 9 or 10, **characterized in that** the device (13) is inserted between the upstream unit, in the form of a diecutting platen press (3), and a downstream unit, in the form of a vacuum transport (9).

12. Machine according to any one of Claims 9 to 11, **characterized in that** it comprises, in the following order, from upstream to downstream, a diecutting platen press (3), a driving arrangement (6), the device (13), a vacuum transport (9), and a waste stripping unit.

## Patentansprüche

1. Transfervorrichtung für einen oder mehrere ebene Träger (4, 4a, 4b), die dafür geeignet ist, zwischen zwei aufeinander folgenden stromaufwärts und stromabwärts gelegenen Einheiten (3, 6, 9) in einer Maschine zur Herstellung von Verpackungen (1) angeordnet zu werden, umfassend eine Brücke (14) mit einer oberen Fläche (16), die eine Verbindung zwischen der stromaufwärts gelegenen Einheit (3, 6) und der stromabwärts gelegenen Einheit (9) sicherstellt, und Verstellmittel (19), um eine Länge (L1, L2) der Brücke (14) variieren zu lassen, **dadurch gekennzeichnet, dass** die Brücke (14) ein statisches Band ist, auf dem der Träger (4, 4a, 4b) gleitet und das ein ortsfestes quergerichtetes Ende (36) und ein bewegliches quergerichtetes Ende (22) aufweist, wobei die Verstellmittel (19) eine Position des beweglichen Endes (22), in Abhängigkeit eines Abstands (E1, E2) zwischen den zwei Einheiten (3, 6, 9), variieren lassen.

2. Vorrichtung nach Anspruch 1, **dadurch gekennzeichnet, dass** die Verstellmittel (19) mindestens einen Schieber aufweisen, der mit der Brücke (14) fest verbunden ist und mit mindestens einem Schieber, der an einem Gestell befestigt ist, zusammenwirkt.

3. Vorrichtung nach Anspruch 2, **dadurch gekennzeichnet, dass** die Verstellmittel (19) zwei Schieber in Form von seitlichen Muttern (21a, 21b) umfassen, die seitlich zu dem beweglichen Ende (22) der Brücke (14) befestigt sind, und zwei seitliche Schieber, in Form einen Kugelgewindetriebs (23a, 23b), umfassen, die durch einen Motor (24) zur Drehung angetrieben werden, beiderseits der Brücke (14) angeordnet sind und an dem Gestell befestigt sind.

4. Vorrichtung nach einem der vorhergehenden Ansprüche, die obere Fläche (16) im Wesentlichen eben, glatt und horizontal ist.

5. Vorrichtung nach einem der vorhergehenden Ansprüche, **dadurch gekennzeichnet, dass** die Brücke (14) aus einem Material hergestellt ist, das ein Verformbarkeitsvermögen aufweist.

6. Vorrichtung nach einem der vorhergehenden Ansprüche, **dadurch gekennzeichnet, dass** sie Spannungsmittel (31) umfasst, um die Brücke (14) unter einer konstanten Spannung zu halten.

7. Vorrichtung nach Anspruch 6, **dadurch gekennzeichnet, dass** die Spannungsmittel (31) zwei seitliche Zylinder (32a, 32b) umfassen, die beiderseits der Brücke angeordnet sind und an einem Gestell befestigt sind.

8. Vorrichtung nach einem der vorhergehenden Ansprüche, **dadurch gekennzeichnet, dass** das ortsfeste quergerichtete Ende (36) stromaufwärts und unterhalb des beweglichen quergerichteten Endes (22) angeordnet ist.

9. Maschine zur Herstellung von Verpackungen mit einer stromaufwärts gelegenen Einheit in Form einer Einheit zur Umformung (3) eines Trägers (2), **dadurch gekennzeichnet, dass** sie eine Vorrichtung (13) nach einem der vorhergehenden Ansprüche umfasst, die stromabwärts zu der Umformungseinheit (3) installiert ist.

10. Maschine nach Anspruch 9, **dadurch gekennzeichnet, dass** sie eine stromabwärts gelegene Einheit (9) mit variabler Länge umfasst und dass die Länge (L1, L2) der Vorrichtung (13) addiert zu der Länge der stromabwärts gelegenen Einheit (9) konstant (T) ist.

11. Maschine nach Anspruch 9 oder 10, **dadurch gekennzeichnet, dass** die Vorrichtung (13) zwischen der stromaufwärts gelegenen Einheit, in Form einer Plattenstanzmaschine (3), und einer stromabwärts gelegenen Einheit, in Form eines Vakuumtransports (9), angeordnet ist.

12. Maschine nach einem der Ansprüche 9 bis 11, **dadurch gekennzeichnet, dass** sie, in der Reihenfolge von stromaufwärts nach stromabwärts, eine Plattenstanzmascheine (3), eine Antriebsanordnung (6), die Vorrichtung (13), einen Vakuumtransport (9) und eine Einheit zum Auswerfen von Abfällen umfasst.
